# EUROPEAN PATENT SPECIFICATION

(11) **EP 4 638 511 B1**
(45) Date of publication and mention of the grant of the patent: **03.06.2026**
(21) Application number: 23836743.7
(22) Date of filing: 19.12.2023
(51) Int. Cl.: C08B 15/06, C08B 37/00, C11D 3/28

(54) **OPTICAL BRIGHTENING AGENTS**
OPTISCHE AUFHELLER
AGENTS D'AZURAGE OPTIQUE

(30) Priority: 20.12.2022 EP 22214991
(43) Date of publication of application: 29.10.2025
(73) Proprietor: Unilever IP Holdings B.V., 6708 WH Wageningen (NL); Unilever Global IP Limited, Wirral, Merseyside CH62 4ZD (GB)
(72) Inventor: THOMPSON, Katherine Mary, 6708 WH Wageningen (NL)
(74) Representative: Unilever Patent Group
(86) International application number: PCT/EP2023/086506
(87) International publication number: WO 2024/133176

(56) References cited:
- EP-B1- 3 433 422
- WO-A9-2015/057645
- RÅDBERG WERONICA ET AL: "Karlstads universitet 651 88 Karlstad Tfn 054 Determination of Distribution of Fines in a Paper Structure using Fluorescence Microscopy -an introduction Physical Chemistry C-level thesis Date/Term: 2010-09-24 Supervisor", 24 September 2010 (2010-09-24), XP093046606, Retrieved from the Internet <URL:http://www.diva-portal.org/smash/get/diva2:356541/FULLTEXT01.pdf> [retrieved on 20230512]
- GLABE C G ET AL: "Preparation and properties of fluorescent polysaccharides", ANALYTICAL BIOCHEMISTRY, ACADEMIC PRESS, AMSTERDAM, NL, vol. 130, no. 2, 15 April 1983 (1983-04-15), pages 287 - 294, XP024818365, ISSN: 0003-2697, [retrieved on 19830415], DOI: 10.1016/0003-2697(83)90590-0
- HOLGER WONDRACZEK ET AL: "Water soluble photoactive cellulose derivatives: synthesis and characterization of mixed 2- (4-methyl-2-oxo-2H-chromen-7-yl)oxy|acetic acid-(3-carboxypropyl)trimethylammonium chloride esters of cellulose", CELLULOSE, KLUWER ACADEMIC PUBLISHERS (DORDRECHT), NL, vol. 19, no. 4, 29 April 2012 (2012-04-29), pages 1327 - 1335, XP035070645, ISSN: 1572-882X, DOI: 10.1007/S10570-012-9708-2

## Description

### FIELD

The present invention relates to optical brightening agents (OBAs), and more particularly to polysaccharide based optical brighteners as well as fabric treatment compositions comprising such OBAs.

### BACKGROUND OF THE INVENTION

Laundry detergent formulations include optical brightening agents (OBAs) to improve the whiteness of laundered fabrics. OBAs with improved biodegradability are highly desirable however while OBAs with some level of biodegradability are known these show instability, poor affinity to fabric substrates.

EP 3 433 422 B1 discloses fluorescent polysaccharides to be used as OBAs. The fluorescent polysaccharides may be cationically- or anionically-substituted according to the substrate on which they are adsorbed.

Despite the prior art, there remains the need to provide improved optical brightening agents (OBAs).

The inventors have surprisingly found that linking fluorophores to certain zwitterionic polysaccharides provides OBAs with improved affinity to fabric substrates. The inventors have found that these compounds, in combination with certain surfactants, provide improved performance with regard to fabrics.

Accordingly in one aspect the invention provides an optical brightening agent (OBA) comprising a zwitterionic polysaccharide linked to a fluorescent group (FG) having an absorption band in the UV region of light and an emission band in the visible region of light.

The zwitterionic polysaccharides of the invention provide improved optical brightening agents (OBAs) by allowing improved compatibility with ionic cleaning formulations i.e. comprising ionic (e.g. anionic or cationic) detergents..

In a further aspect the invention provides a fabric treatment composition comprising an optical brightening agent (OBA) of the invention. The composition preferably further includes a surfactant which may be an anionic and/or a nonionic and/or a zwitterionic surfactant.

In a further aspect the invention provides a method of treating a fabric comprising the step of treating the fabric with the composition adding the fabric treatment composition to water to form a wash liquor and treating a fabric with said wash liquor.

In a further aspect the invention provides a method of making a fabric treatment composition comprising the step including in the fabric treatment composition an OBA of the present invention.

### Fluorescer Group (FG)

The FG has an absorption band in the UV region of light and an emission band in the visible region of light i.e. preferably 420 -470 nm and more preferably 435-450 nm.

The fluorescent group preferably comprises a mono or polycyclic ring system, at least one heteroatom selected from N, O and S, and conjugated double bonds.

Preferably the heteroatom is present in the ring structure or as a ring substituent.

Preferred the heteroatoms is selected from N and O.

Advantageously the fluorescent groups (FG) comprise at least one nitrogen or oxygen atom and in addition, fluorescent groups (FG) may still further comprise one or more other heteroatoms selected from O and S or N and S respectively.

In particular the present OBAs can be prepared by esterification of the polysaccharides with reactive compounds thereby forming compounds of formula:

PS-O-FG

wherein FG is a fluorescent group and PS is a polysaccharide backbone, with only one substituent of each substituent type shown.

The FG preferably comprises a mono or polycyclic ring system at least one nitrogen atom or oxygen atom and conjugated double bonds.

The ring system may be optionally substituted with one or more groups selected from a group consisting of aryls, e.g. phenyl, heteroaryls, e.g. pyridyl, and halogen, hydroxyl, amino, nitro, cyano, C1-3-alkyl, C1-3-haloalkyl, C1-3-alkoxy, and SO2 substituted aromatic rings.

### Linkage

Preferably the FB is linked to the zwitterionic polysaccharide via **a linkage.** The linkage may comprise any chemical group resulting from a bond formation with a functional group of the FG being able to form a bond with a native functional group of the polysaccharide repeating units.

The FG is preferably bonded via a linkage group to any one of the native hydroxyl groups of the polysaccharide repeating units. The hydroxyl groups may comprise any of the native hydroxyl groups of a sugar ring of the polysaccharide backbone or any of the hydroxyl groups depending from backbone.

Preferably the linkage comprises an ester linkage or amide linkage.

The **linkage** may be selected from a group consisting of -C(O)(CH₂)ₘ-, -C(S)(CH₂)ₘ-, -O(CH₂)ₘ-, OCH2CH(OH)(CH₂)ₘ-, C(O)O(CH₂)ₘ-, C(S)O(CH₂)ₘ-, C(O)NH(CH₂)ₘ-, C(S)NH(CH₂)ₘ-, C(O)Ph-, C(S)Ph-, -Ph-, -C(O)OPh-, -C(S)OPh-, -C(O)NHPh-, and -C(S)NHPh-, wherein m is an integer from 0 to 6, preferably 0-3, more preferably 0-1, most preferably 0.

Highly preferred linkages comprise an ester or an amide group and most preferred comprise - C(O)-O- i.e. by direct ester linkage between the FG and the polysaccharide or and -C(O)-NH-i.e. a direct amide linkage (i.e. where m = 0)

The FG may be prepared by any suitable technique e.g. the fluorescer group may be grafted to the PS.

Preferably the FG comprises no more than four cyclic moieties, more preferably no more than three, even more preferably no more than two, most preferably no more than one.

Advantageously, the OBA of the present invention includes only a single cyclic moiety.

Single cyclic moieties may exclude thiazole structures.

Single cyclic moieties may exclude pyridine structures.

Single cyclic moieties may exclude one or more of the following structures: 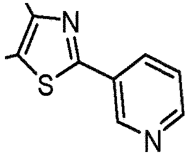 or

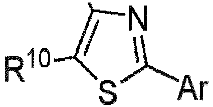

Preferably the FG used to make the OBA comprises a carboxylic group and/or an amide group. Such functional groups can be reacted with e.g. hydroxyl groups of the polysaccharide to create respective ester or amide linkages in the resultant OBA.

Preferably the FB used to make the OBA comprises a carboxy or amide functionalized cyclic moiety.

Preferably the FG used to make the OBA comprises an amino-benzoate moiety. More preferably the FG comprises 2-aminobenzoate.

Even more preferably the FG comprises an anthranilate moiety.

The anthranilate moiety may be linked to a carbon atom preferably in the ring of a polysaccharide sugar residue. Accordingly, in a particularly preferred embodiment, the FG comprises esters of 2-aminobenzoic acid (anthranilic acid) and its N-alkyl derivatives, for example 2-(methylamino)benzoic acid (N-methyl anthranilate or MANT) which has the following structure:

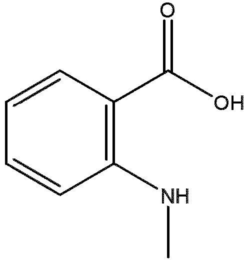

Accordingly, the OBA of the present invention may be a compound of formula: 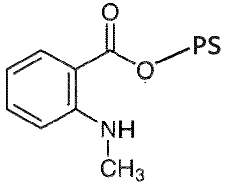 wherein:
PS is a polysaccharide backbone, with only one substituent of each substituent type shown.

OBAs comprising MANT are preferably made using N-methylisatoic anhydride (MANT) precursor having the formula:

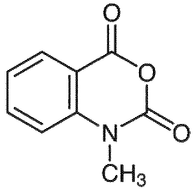

A general reaction scheme is below (where PS is the polysaccharide and OH is a native functional group of the PS):

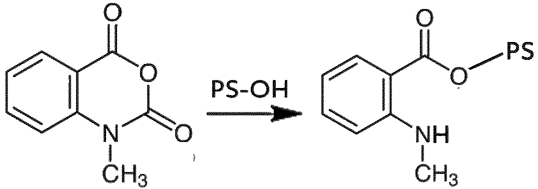

Alternatively starting materials for the FG include any amino-benzoate e.g. methyl 2-amino benzoate (methyl anthranilate) with the following structure:

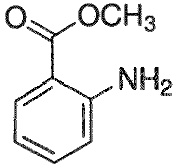

Alternatively, the FG may comprise a moiety having the following structure: 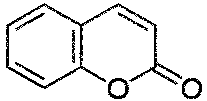 wherein:
PS is a polysaccharide backbone, with only one substituent of each substituent type shown.

Coumarin substitution to enable binding to the polysaccharide may include carboxyl functionalities such as the carboxylic acid or acid chloride to allow e.g ester formation with the native hydroxyl groups on the zwitterionic polysaccharides. Substitution at the 3,4,5,6,7 and 8 positions is possible, with 3- and 7- derivatives being preferred. The coumarin ring can also preferably be substituted (e.g. at the 7-position) by electron donating substituents to increase fluorescence intensity - e.g. hydroxyl, methyl, methoxy, NH2, NR2 where R is a an alkyl group such as methyl or ethyl.

Such structures may be known as coumarin or considered as belong to the class of lactones known as benzopyrones.

Accordingly, the present OBA may be a compound of formula:

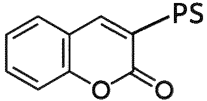

Or

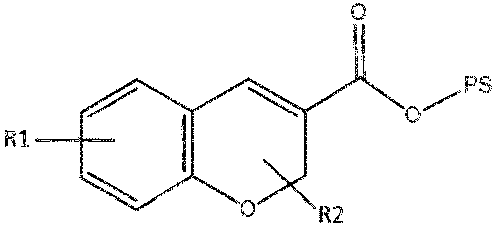

In a further example, the native functional group, the FG and the linkage form a group O-FG of formula: 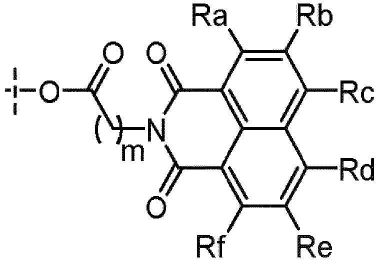 wherein
m is an integer from 0 to 6, preferably 0-3, more preferably 0-1, most preferably 0; and Ra, Rb, Rc, Rd, Re, and Rf are each independently selected from a group consisting of H, halogen, hydroxyl, amino, nitro, cyano, C1-3-alkyl, C1-3-haloalkyl, C1-3-alkoxy, and SO2, preferably each is selected from H or methyl, more preferably each H.

Accordingly the present OBA may be a compound of formula : 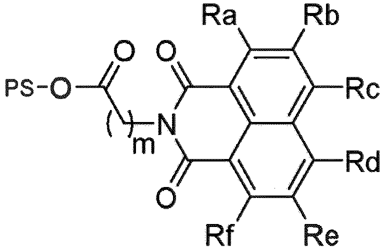 wherein
m is an integer from 0 to 6, preferably 0-3, more preferably 0-1, most preferably 0; and Ra, Rb, Rc, Rd, Re, and Rf are each independently selected from a group consisting of H, halogen, hydroxyl, amino, nitro, cyano, C1-3-alkyl, C1-3-haloalkyl, C1-3-alkoxy, and SO2, preferably each is selected from H or methyl, more preferably each H.

Accordingly the OBA may be a compound of formula: 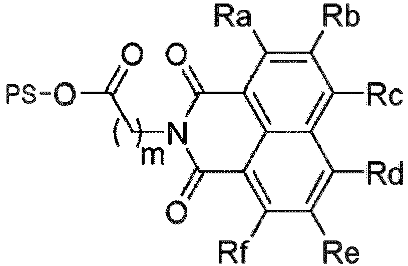 wherein
PS is a polysaccharide, with only one substituent of each substituent type
   shown;
m is an integer from 0 to 6, preferably 0-3, more preferably 0-1, most preferably 0; and
Ra, Rb, Rc, Rd, Re, and Rf are each independently selected from a group consisting of H, halogen, hydroxyl, amino, nitro, cyano, C₁₋₃-alkyl, C₁₋₃-haloalkyl, C₁₋₃-alkoxy, and SO₂, preferably each is H.

The OBA may comprise a compound of formula: 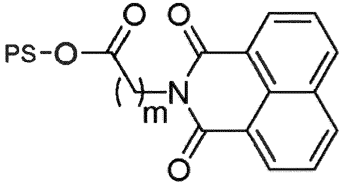 Wherein
PS is a polysaccharide with only one substituent of each substituent type shown;
m is an integer from 0 to 6, preferably 0-3, more preferably 0-1, most preferably 0.

In another advantageous example the native functional group (F), the FG and the linkage form a group O-FG of formula: 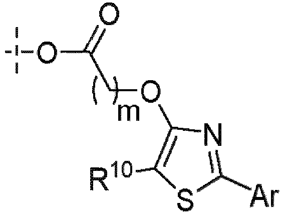 wherein:
m is an integer from 0 to 6, preferably 0-3, more preferably 0-1, most preferably 0; and
R¹⁰ is H or C₁₋₃-alkyl; and
Ar is an aryl or heteroaryl, preferably pyridyl, optionally substituted one or more times with a group selected from a group consisting of halogen, hydroxyl, amino, nitro, cyano, C1-3-alkyl, C1-3-haloalkyl, C1-3-alkoxy, and SO2.

Accordingly, the OBA may be a compound of formula: 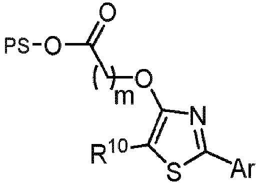 wherein
PS is a polysaccharide, with only one substituent of each substituent type shown;
m is an integer from 0 to 6, preferably 0-3, more preferably 0-1, most preferably 0; and
R¹⁰ is H or C₁₋₃-alkyl; and
Ar is an aryl or heteroaryl, preferably pyridyl, optionally substituted one or more times with a group selected from a group consisting of halogen, hydroxyl, amino, nitro, cyano, C1-3-alkyl, C1-3-haloalkyl, C1-3-alkoxy, and SO2.

Preferably, the OBA may be a compound of formula: 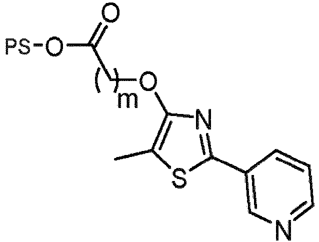 wherein
PS is a polysaccharide, with only one substituent of each substituent type shown;

Advantageously the OBA is a compound of formula: 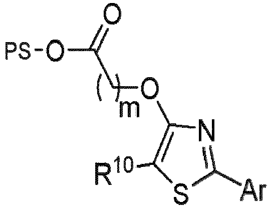 wherein
PS is a polysaccharide, with only one substituent of each substituent type
   shown;
m is an integer from 0 to 6, preferably 0-3, more preferably 0-1, most preferably 0; and
R¹⁰ is H or C₁₋₃-alkyl; and
Ar is aryl or heteroaryl, preferably pyridyl, optionally substituted one or more times with a group selected from a group consisting of halogen, hydroxyl, amino, nitro, cyano, C1-3-alkyl, C1-3-haloalkyl, C1-3-alkoxy, and SO2.

### Zwitterionic Polysaccharide

The zwitterionic polysaccharide may be linear or branched. The zwitterionic polysaccharide may comprise branched or unbranched materials.

Preferably the net charge of the zwitterionic polysaccharide is negative or neutral. Highly preferably the net charge is not positive.

### Betaine-Functionalized Polysaccharide

The zwitterionic polysaccharide may comprise a betaine functional polysaccharide.

By "betaine functional" it is meant any polysaccharide which has at least one betaine moiety, preferably at least one functional betaine moiety.

Preferably the betaine is any neutral chemical compound with a positively charged cationic functional group, such as a quaternary ammonium or phosphonium cation (generally: onium ions) that bears no hydrogen atom and with a negatively charged functional group such as a carboxylate group that may not be adjacent to the cationic site.

Betaine moieties may have a formula selected from the group consisiting: 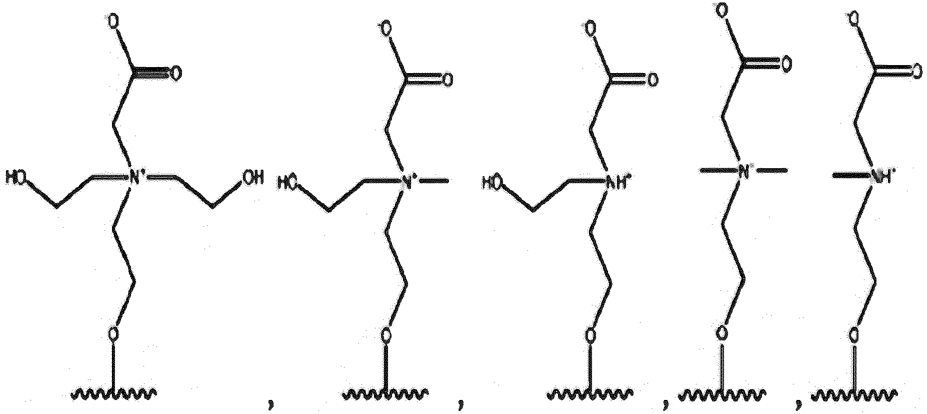 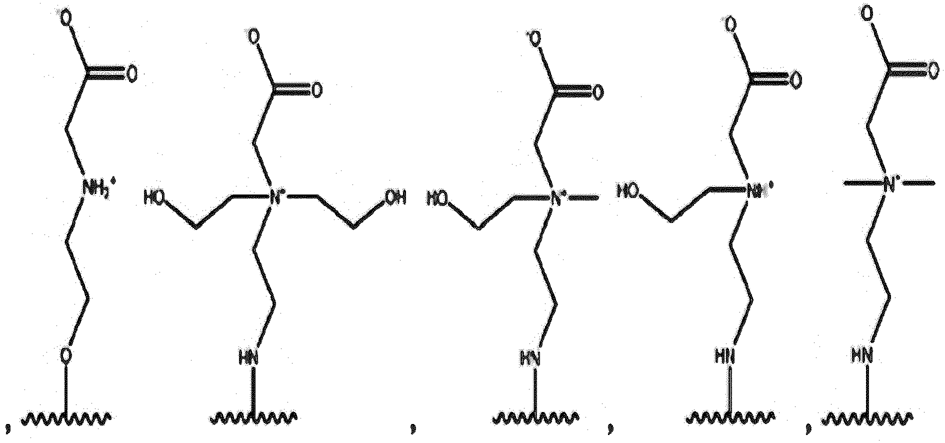 and 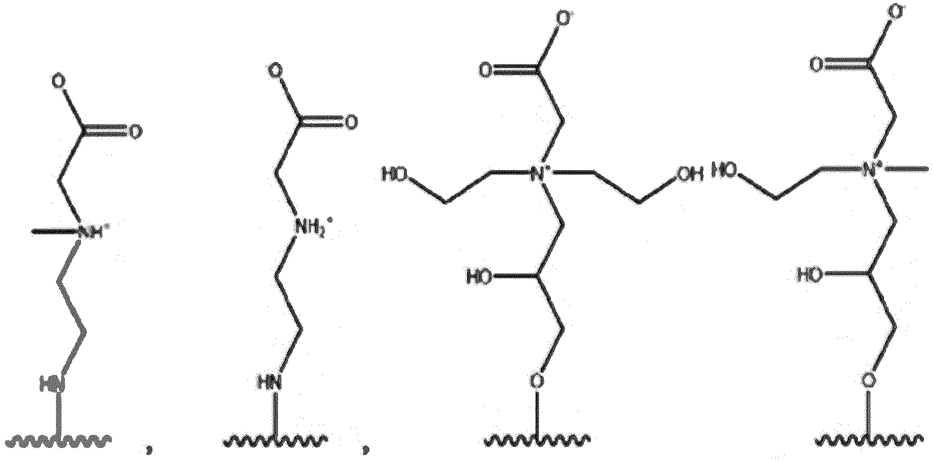 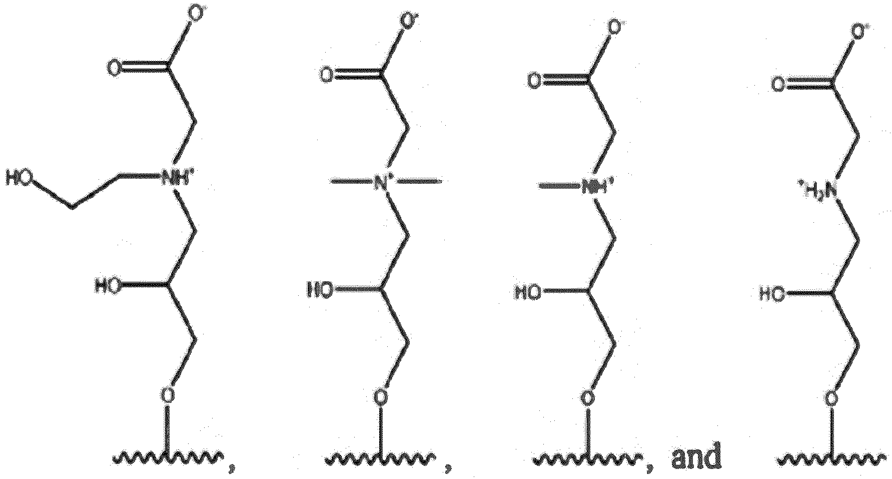 wherein 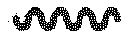 is the polysaccharide.

The zwitterionic composition of claim 1 or 2 wherein said one or more zwitterionic moieties have a formula selected from: 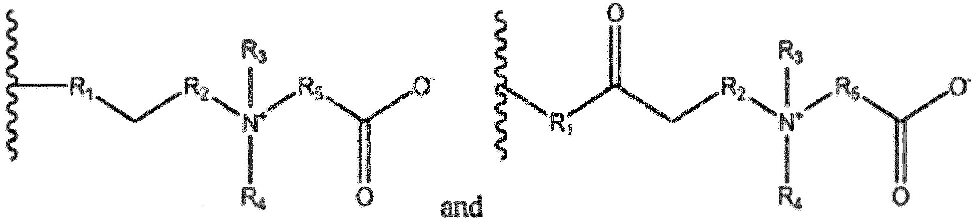 wherein R₁ is -O-, -NH-, -C(O)NH-, -CH₂C(O)NH-, -CH₂CH₂C(O)NH-, - (CH₂)ₘC(O)NH-, - NHC(O)-, - NHC(O)CH₂-, -NHC(O)CH₂CH₂-, -NHC(O)(CH₂)ₘ-, -(CH₂)ₘNHC(O)(CH₂)ₙ-, -(CH₂)ₘNHC(O)O(CH₂)ₙ-, - (CH₂)ₘOC(O)NH(CH₂)ₙ-, - (CH₂)ₘC(O)NH(CH₂)ₙ-, -NHC(O)(CH₂)ₘC(O)NH-, -OC(O)(CH₂)ₘC(O)NH-, - O(CH₂)ₘC(O)NH-, -NHC(O)(CH₂)ₘO-, -NHC(O)(CH₂)ₘC(O)O-, -C(O)O-, - CH₂C(O)O-, - CH₂CH₂C(O)O-, -(CH₂)ₘC(O)O-, OC(O)-, -OC(O)CH₂-, - OC(O)CH₂CH₂-, -OC(O)(CH₂)ₘ-, - OC(O)(CH₂)ₘC(O)O-, -OC(O)(CH₂)ₘO-, - O(CH₂)ₘC(O)O-, -(CH₂)ₘOC(O)(CH₂)ₘ-, -(CH₂)ₘC(O)O(CH₂)ₙ-, -CH₂O-, - CH₂CH₂O-, -CH₂CH₂CH₂O-, -CH₂CH₂CH₂CH₂O-, -CH₂CH₂CH₂CH₂CH₂O-, CH₂CH₂CH₂CH₂CH₂CH₂O-, -(CH₂)ₘO-, -O(CH₂)ₘO-, -O(CH₂)ₘ-, -(CH₂)ₘ-, - O(CH₂CH₂O)ₘ, -(OCH₂CH₂)ₘ- or -(CH₂CH₂O)ₘ-; R₂ is -CH₂-, -CH₂CH₂-, - CH₂CH₂CH₂-, -CH₂CH₂CH₂CH₂-, -CH₂CH₂CH₂CH₂CH₂-, or - (CH₂)ₓ-; R₃ is -H, -CH₃, CH₂CH₃ -CH₂CH₂CH₃, -CH₂CH₂CH₂CH₃, -CH₂CH₂OH, -CH₂CH₂CH₂OH, CH₂CH₂CH₂CH₂OH or -CH₂CH₂CH₂CH₂CH₂OH; R₄ is -H, -CH₃, CH₂CH₃, - CH₂CH₂CH₃, - CH₂CH₂CH₂CH₃, -CH₂CH₂OH, -CH₂CH₂CH₂OH, -CH₂CH₂CH₂CH₂OH, or -CH₂CH₂CH₂CH₂CH₂OH; R₅ is -CH₂-, -CH₂CH₂-, -CH₂CH₂CH₂-, -CH₂CH₂CH₂CH₂-, -CH₂CH₂CH₂CH₂CH₂-, or -(CH₂)y; m, n, x and y are each an integer from 1 to 20; and is the polysaccharide.

The zwitterionic polysaccharide may comprise a sulfobetaine modified polysaccharide. Sulfobetaines preferably comprise the following structure:

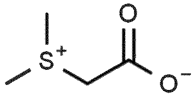

The zwitterionic polysaccharide may comprise a carboxybetaine modified polysaccharide.

The degree of substitution of one or more zwitterionic moieties comprise from 1% to 300%.

Betaine modified polysaccharides may encompass zwitterated polysaccharides which are made by reacting a polysaccharide with a carboxybetaine (CB) or other zwitterionic betaine.

### Betaine and sulfobetaine modified cellulosics

Betaine modified polysaccharides used in the invention may encompass betaine modified cellulose derivatives e.g. betaine modified hydroxyethyl cellulose (HEC) or betaine modified carboxymethyl cellulose (CMC) which may be obtained by e.g esterification of the polysaccharide utilizing N-chlorobetainyl chloride.

Sulfobetaine functionalised HEC may be synthesized by the grafting of the sulfobetaine-type zwitterionic monomer 3-dimethyl-(methacryloyloxyethyl)ammonium propane sulfonate (DMAPS) onto hydroxyethyl cellulose (HEC) in the presence of a ceric ammonium nitrate (CAN)/ethylenediaminetetraacetic acid (EDTA) initiation system

### Betaine modified APGs

Betaine functionalised polysaccharides used in the invention my encompass betaine-functionalised alkylpolyglucosides (APGs) including, without limitation, betaine-functionalized alkylpolyglucoside crosspolymers, and inorganic salts thereof. A representative structure of betaine-functionalized alkylpolyglucoside crosspolymers is shown below.

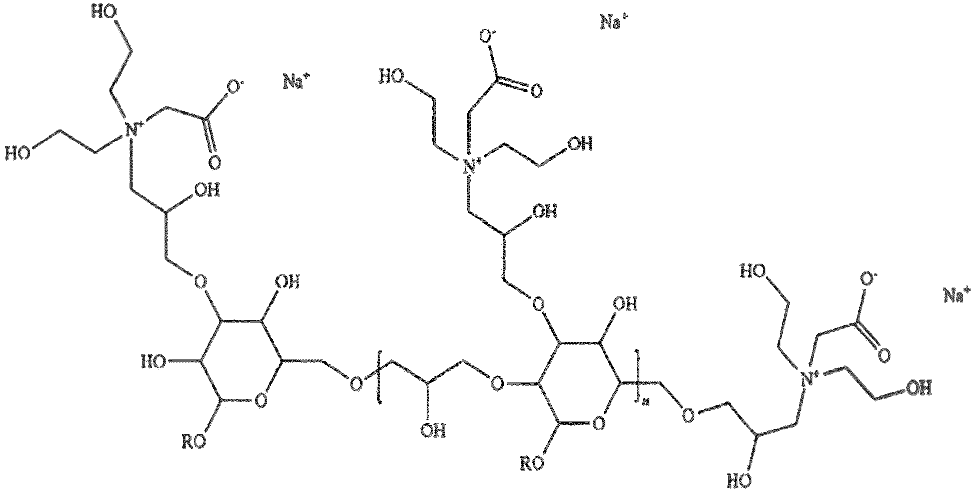

In certain embodiments of the present disclosure, n in the formula above is between about 2 to about 11 and R1 is a C2 -C24 alkyl group. Accordingly, in certain embodiments, the alkylpolyglucoside derivatives of the present disclosure can include C12 -C14 Sodium Bis-Hydroxyethylglycinate Lauryl-Glucosides Crosspolymer, and C12 to C18 Sodium Bis-Hydroxyethylglycinate Coco-Glucosides Crosspolymer, which are commercially available from Colonial Chemicals, Inc. (US) as Poly Suga^{®}Glycinate L and Poly Suga^{®}Glycinate C, respectively. These and related compounds can be synthesized according to methods known in the art.

Mixtures of any of the above-described materials may also be suitable.

Polysaccharides for use in the invention will generally have a weight average molecular weight (M_{w}) in the range of from about 5 kDa to about 2000 kDa, preferably from about 10 kDa to about 1800500 kDa and more preferably from about 20 kDa to about 1600 kDa.

In the case of zwitterionic polysaccharides the native functional groups are preferably hydroxyl groups and the degree of substitution may be in the range from 1 to 3.

### Degree of substitution

Preferably the zwitterionic polysaccharide is substituted by the fluorescent group (FG) at a degree of substitution (DS1) of 0.001 to 1.5, preferably at least 0.002 more preferably from 0.005 to 0.25.

**"Degree of substitution (DS)"** used herein and hereafter refers to the extent to which the native functional groups of the polysaccharide repeating unit have been substituted with the indicated substituent groups, namely fluorescent groups (FG) and zwitterionic This mean value indicates the number of functionalized native functional groups in respect of the substituent group indicated. The degree of substitution is determined by elemental analysis and may be further confirmed by other typical method used in polysaccharide analysis such as, NMR spectroscopy, FTIR spectroscopy and various other methods.

### Native functional group

The native functional group may comprise any functional group of the polysaccharide repeating units.

Native functional groups include a hydroxyl group, amino groups or carboxyl groups. Preferably the native functional group is a hydroxyl group.

'Native' is intended to mean any group that is present in the polysaccharide prior to combining with the FG. Where modified polysaccharides such as betaine functionalized polysaccharides are linked to FGs, the 'native' group is preferably the group e.g. a hydroxyl group, amino groups, carboxyl groups, present in the base sugar repeating unit of the polysaccharide prior to modification of the polysaccharide.

The native functional group may be on the polysaccharide backbone or on any pendant groups or branched side groups if present.

Preferably the linkage is achieved by reacting the FB with any one of the native functional groups of the zwitterionic polysaccharide repeating units, such as hydroxyl groups, amino groups, carboxyl groups and/or any other functional groups whichh may be present in the polysaccharide repeating units, by e.g. via esterification or etherification reactions.

The present polysaccharide derivatives can be obtained in a manner known per se, in particular by functionalizing polysaccharides with reactive compounds thereby forming compounds of formula (I)

PS-N-FG (I)

wherein
each N is a residue of any native functional group of a repeating unit of the polysaccharide e.g. backbone or side chain; and
PS is a polysaccharide, with only one substituent of each substituent type shown for simplicity;

### Definitions

The following terms, as used here are defined below:
**"A"** and **"an",** are understood to mean one or more of what is claimed or described.

**"Alkyl"** refers to a straight or branched chain monovalent hydrocarbon radical having a specified number of carbon atoms. Alkyl groups may be unsubstituted or substituted with substituents that do not interfere with the specified function of the composition and may be substituted once or twice with the same or different group. Substituents may include alkoxy, hydroxy, mercapto, amino, alkyl substituted amino, nitro, carboxy, carbonyl, carbonyloxy, cyano, methylsulfonylamino, or halogen, for example. Examples of "alkyl" include, but are not limited to, methyl, ethyl, n-propyl, isopropyl, n-butyl, s-butyl, t-butyl, n-pentyl, n-hexyl, 3-methylpentyl, and the like.

**"Detergent composition"** in the context of this invention means cleaning compositions, generally containing detersive surfactants, optionally other treatment ingredients, intended for and capable of treating fabrics substrates as defined herein. The phrases "detergent composition" and "cleaning composition" are used interchangeably and include compositions and formulations designed for cleaning soiled material. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, , unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the rinse or wash cycle of the laundering operation.

**"Detersive surfactant"** in the context of this invention denotes a surfactant which provides a detersive (i.e. cleaning) effect to a substrate such as fabric treated as part of a domestic treatment e.g.laundering process.

**"Liquid"** denotes that a continuous phase or predominant part of the composition is liquid and that the composition is flowable at 15°C and above. Accordingly, the term "liquid" may encompass emulsions, suspensions, and compositions having flowable yet stiffer consistency, known as gels or pastes, foams and mousses. Non-limiting examples of liquids include light duty and heavy duty liquid detergent compositions, fabric enhancers, detergent gels commonly used for laundry, bleach and laundry additives. Gases, e.g., suspended bubbles, or solids, e.g. particles, may be included within the liquids.

**"Optical brightening agent (OBA)"** used herein and hereafter refers to compounds also known as fluorescent whitening agents that improve the visual appearance or the optical properties such as whiteness and/or brightness of materials to which they are applied to. The fluorophores of OBAs absorb ultraviolet (UV) radiation of the incident light and emit it back as blue visible light. As a result, the materials treated with OBAs are perceived to be whiter. An optical brightening agent improves the whiteness and/or optical brightness of the material to which it is applied to as compared to the same material without the said optical brightening agent.

**"Polymer"** refers to a macromolecule comprising repeat units where the macromolecule has a molecular weight of at least 1000 Daltons. The polymer may be a homopolymer, copolymer, terpoymer etc.

**"Substantially free of"** or **"substantially free from"** refers to either the complete absence of an ingredient or a minimal amount thereof merely as impurity or unintended byproduct of another ingredient. A composition that is "substantially free" of/from a component means that the composition comprises less than 0.5%, 0.25%, 0.1%, 0.05%, or 0.01%, or even 0%, by weight of the composition, of the component.

**"Substrate"** when used in relation to the invention is a fabric. Fabric substrates includes clothing, linens and other household textiles etc. In the context of fabrics, wherein the term "linen" is used to describe certain types of laundry items including bed sheets, pillow cases, towels, tablecloths, table napkins and uniforms and the term "textiles" can include woven fabrics, non-woven fabrics, and knitted fabrics and fabrics can include natural or synthetic fibres such as silk fibres, linen fibres, cotton fibres, polyester fibres, polyamide fibres such as nylon, rayon, acrylic fibres, acetate fibres, and blends thereof including cotton and polyester blends, and fabrics which are elastic and/or contain elastane.

**"Fabric treatment composition"** means any type of treatment composition and may include, but are not limited to, liquid cleaning and disinfecting agents laundry cleaning compositions, fabric softening compositions, fabric enhancing compositions, fabric freshening compositions, laundry pre-treatment or pre-washing compositions, laundry pre-treatment compositions, laundry additives (e.g., rinse additives, wash additives, etc.), post-rinse fabric treatment compositions, dryer compositions, dry cleaning compositions, ironing aid, as well as. All of such products which are applicable may be in standard, concentrated or even highly concentrated form even to the extent that such products may in certain aspect be non-aqueous.

**"Treatment"** in the context of treating substrates especially fabrics, may include cleaning, washing, conditioning, lubricating, care, softening, easy-ironing, anti-wrinkle, fragrancing, de-pilling, rejuvenation including colour rejuvenation, soaking, pretreatment of substrates, bleaching, colour treatments, soil removal, stain removal and any combination thereof. Optical brighteners of the invention may be used as part of any such treatments.

**"Unit dose"** means an amount of composition suitable to treat one load of laundry, such as, for example, from about 0.05 g to about 100 g, or from 10 g to about 60 g, or from about 20 g to about 40 g. A unit dose product may be in the form of a tablet, a pouch, a sheet, a fibrous article, or polymeric film package or capsule containing the composition. Such pouches typically include a water-soluble film, such as a polyvinyl alcohol water-soluble film, that at least partially encapsulates a composition. Suitable films are available from MonoSol, LLC (Indiana, USA).

A multi-compartment pouch may have at least two, at least three, or at least four compartments. A multi-compartmented pouch may include compartments that are side-by-side and/or superposed. The composition contained in the pouch or compartments thereof may be liquid, solid (such as powders), or combinations thereof.

"Water-soluble" means the article (film or package) dissolves in water at 20° C.

Unless otherwise noted, all component or composition levels are in reference to the active portion of that component or composition, and are exclusive of impurities, for example, residual solvents or by-products, which may be present in commercially available sources of such components or compositions.

Dimensions and values disclosed herein are not to be understood as being strictly limited to the exact numerical values recited. Instead, unless otherwise specified, each such dimension is intended to mean both the recited value and a functionally equivalent range surrounding that value. For example, a value disclosed as "50 microns' is intended to mean "about 50 microns."

All percentages and ratios are calculated by weight unless otherwise indicated. All percentages and ratios are calculated based on the total composition unless otherwise indicated. It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

All cited patents and other documents are, in relevant part, incorporated by reference as if fully restated herein. The citation of any patent or other document is not an admission that the cited patent or other document is prior art with respect to the present invention.

### Product Form

Composition may take any suitable form including liquids or solids and may include unit dose formulations e.g. composition enclosed within a water-soluble polymeric film, delayed delivery formulation, dilutable formulations, compositions contained on or in a porous substrate or nonwoven sheet, liquids in bulk storage for autodosing washing machines, and other suitable forms. Dilutable means that the consumer can purchase a concentrated product and take the concentrate home where it can be diluted for use.

### Liquid compositions

"Liquid" compositions have a continuous phase or predominant part of the composition in the form of a liquid and are flowable at 15°C and above. Accordingly, the term "liquid" may encompass emulsions, suspensions, and compositions having flowable yet stiffer consistency, known as gels or pastes.

Liquid compositions may contain from 10-80wt% water but this is dependent on the level of surfactant.

### Auto-dosing

Liquids may be provided in bulk storage reservoirs, typically for auto-dosing washing machines. Bulk storage reservoirs hold multiple doses (i.e. for multiple washing cycle), preferably from 80ml - 3000 ml of liquid. A typical example of such a machine is found in EP-A-3 071 742 (Electrolux). Bulk storage reservoirs may be provided as pre-filled cartridges or the consumer may purchase liquids in a e.g. pouch and then empty the contents into a bulk storage reservoir of the washing machine.

### Solid compositions

Solid compositions can take a variety of physical solid forms including forms such as powder, granule, ribbon, noodle, paste, tablet, flake, pastille and bar, and preferably the composition is in the form of powder, granules or a tablet. Solid compositions may preferably be in a form selected from powder, unit dose or pouch form, tablet, bar, or flake.

Solid compositions preferably have a density of more than 350 grams/litre, more preferably more than 450 grams/litre or even more than 570 grams/litre. The solid laundry detergent composition according to the present invention is preferably free flowing. Preferably the composition is used for laundering fabrics using manual-washing method. Preferably, the composition of the present invention is a solid laundry detergent composition. Preferably the composition is in the form of a spray -dried powder or particulate free-flowing form.

### OBA Levels

Preferably laundry compositions comprise 0.01 to 10%wt of the OBA of the present invention.

### Surfactant

Compositions according to the present invention may comprise a surfactant or surfactant system wherein the surfactant can be selected from nonionic surfactants, anionic surfactants, cationic surfactants, ampholytic surfactants, zwitterionic surfactants, semi- polar nonionic surfactants and mixtures thereof.

### Surfactant levels

Compositions of the invention preferably comprises from 0.1 % to 70%, more preferably 2 to 60%wt, from 1% to 50% or from 5% to about 40% or from 4 to 30 wt. %. (total) surfactant based on weight of the composition.

### Anionic surfactants

Preferably, the composition comprises anionic surfactants such as sulfonate and sulfate surfactants, preferably alkylbenzene sulphonates, alkyl sulfates and alkyl ether sulfates. The alkyl chain is preferably C10-C18. Alkyl ether sulfates are also called alcohol ether sulfates.

Commonly used in laundry liquid compositions are C12-C14 alkyl ether sulfates having a straight or branched chain alkyl group having 12 to 14 carbon atoms (C12-14) and containing an average of 1 to 3EO units per molecule. A preferred example is sodium lauryl ether sulfate (SLES) in which the predominantly C12 lauryl alkyl group has been ethoxylated with an average of 3EO units per molecule.

The anionic surfactant is preferably added to the detergent composition in the form of a salt. Preferred cations are alkali metal ions, such as sodium and potassium. However, the salt form of the anionic surfactant may be formed in situ by neutralization of the acid form of the surfactant with alkali such as sodium hydroxide or an amine, such as mono-, di-, or triethanolamine. Weight ratios are calculated for the protonated form of the surfactant.

Ethoxy units may be partially replaced by propoxy units in anionic and non-ionic surfactants.

Further examples of suitable anionic surfactants are rhamnolipids, alpha-olefin sulfonates, olefin sulfonates, alkene sulfonates, alkane-2,3-diylbis(sulfates), hydroxyalkanesulfonates and disulfonates, fatty alcohol sulfates (FAS), paraffin sulfonates, ester sulfonates, sulfonated fatty acid glycerol esters, methyl ester sulfonate alkyl- or alkenylsuccinic acid, dodecenyl/tetradecenyl succinic acid (DTSA), fatty acid derivatives of amino acids, DATEM's, CITREM's and diesters and monoesters of sulfo-succinic acid.

### C16 and/or C18 Alcohol ether sulfates

Preferably, the composition comprises alkyl ether sulphate anionic surfactant. Preferably, the alkyl ether sulphate comprises from 12 to 18 carbon atoms.

C12 based alkyl ether sulphates are well documented and may be present at any amount from 1 to 30% wt. of the composition. However, a further preferred ether sulfate is of the formula:

R₂-O-(CH₂CH₂O)ₚSO₃H

Where R₂ is selected from saturated, monounsaturated and polyunsaturated linear C16 and C18 alkyl chains and where p is from 3 to 20, preferably 4 to 12, more preferably 5 to 10. The mono-unsaturation is preferably in the 9 position of the chain, where the carbons are counted from the ethoxylate bound chain end. The double bond may be in a cis or trans configuration (oleyl or elaidyl), but is preferably cis. The cis or trans ether sulfate CH₃(CH₂)₇-CH=CH-(CH₂)₈O-(CH₂CH₂O)ₙSO₃H, is described as C18:1(Δ9) ether sulfate. This follows the nomenclature *CX:Y(ΔZ)* where *X* is the number of carbons in the chain, *Y* is the number of double bonds and Δ*Z* the position of the double bond on the chain where the carbons are counted from the OH bound chain end.

Preferably, R2 is selected from saturated C16, saturated C18 and monounsaturated C18. More preferably, the saturated C16 is at least 90% wt. of the C16 content linear alkyl. As regards the C18 content, it is preferred that the predominant C18 moiety is C18:1, more preferably C18:1(Δ9). Preferably, the proportion of monounsaturated C18 constitutes at least 50% wt. of the total C16 and C18 alkyl ether sulphate surfactant.

More preferably, the proportion of monounsaturated C18 constitutes at least 60% wt., most preferably at least 75 of the total C16 and C18 alkyl ether sulphate surfactant.

Preferably, the C16 alcohol ethoxylate surfactant comprises at least 2% wt. and more preferably, from 4% of the total C16 and C18 alkyl ether sulphate surfactant.

Preferably, the saturated C18 alkyl ether sulphate surfactant comprises up to 20% wt. and more preferably, up to11% of the total C16 and C18 alkyl ether sulphate surfactant. Preferably the saturated C18 content is at least 2% wt. of the total C16 and C18 alkyl ether sulphate content.

Where the composition comprises a mixture of the C16/18 sourced material for the alkyl ether sulphate as well as the more traditional C12 alkyl chain length materials it is preferred that the total C16/18 alkyl ether sulphate content should comprise at least 10% wt. of the total alkyl ether sulphate, more preferably at least 50%, even more preferably at least 70%, especially preferably at least 90% and most preferably at least 95% of alkyl ether sulphate in the composition.

Ether sulfates are discussed in the Anionic Surfactants: Organic Chemistry edited by Helmut W. Stache (Marcel Dekker 1995), Surfactant Science Series published by CRC press.

Linear saturated or mono-unsaturated C20 and C22 ether sulfate may also be present. Preferably the weight fraction of sum of 'C18 ether sulfate' / 'C20 and C22 ether sulfate' is greater than 10.

Preferably the C16 and C18 ether sulfate contains less than 15 wt.%, more preferably less than 8 wt.%, most preferably less than 4wt% and most preferably less than 2% wt. of the ether sulfate polyunsaturated ether sulfate. A polyunsaturated ether sulfate contains a hydrocarbon chains with two or more double bonds.

Ether sulfate may be synthesised by the sulphonation of the corresponding alcohol ethoxylate. The alcohol ethoxylate may be produced by ethoxylation of an alkyl alcohol. The alkyl alcohol used to produced the alcohol ethoxylate may be produced by transesterification of the triglyceride to a methyl ester, followed by distillation and hydrogenation to the alcohol. The process is discussed in Journal of the American Oil Chemists' Society. 61 (2): 343-348 by Kreutzer, U. R. Preferred alkyl alcohol for the reaction is oleyl alcohol with an iodine value of 60 to 80, preferably 70 to 75, such alcohol are available from BASF, Cognis, Ecogreen.

The degree of polyunsaturation in the surfactant may be controlled by hydrogenation of the triglyceride as described in: A Practical Guide to Vegetable Oil Processing (Gupta M.K. Academic Press 2017). Distillation and other purification techniques may be used.

Ethoxylation reactions are described in Non-Ionic Surfactant Organic Chemistry (N. M. van Os ed), Surfactant Science Series Volume 72, CRC Press.

Preferably the ethoxylation reactions are base catalysed using NaOH, KOH, or NaOCH₃. Even more preferred are catalyst which provide narrower ethoxy distribution than NaOH, KOH, or NaOCH₃. Preferably these narrower distribution catalysts involve a Group II base such as Ba dodecanoate; Group II metal alkoxides; Group II hyrodrotalcite as described in WO2007/147866. Lanthanides may also be used. Such narrower distribution alcohol ethoxylates are available from Azo Nobel and Sasol.

Preferably the narrow ethoxy distribution has greater than 70 wt.%, more preferably greater than 80 w.t% of the ether sulfate R₂-O-(CH₂CH₂O)ₚSO₃H in the range R₂-O-(CH₂CH₂O)_{z}SO₃H to R₂-O-(CH₂CH₂O)_{w}SO₃H where q is the mole average degree of ethoxylation and x and y are absolute numbers, where z = p-p/2 and w = p+p/2. For example when p=6, then greater than 70 wt.% of the ether sulfate should consist of ether sulfate with 3, 4, 5, 6, 7, 8, 9 ethoxylate groups.

The ether sulfate weight is calculated as the protonated form: R₂-O-(CH₂CH₂O)ₚSO₃H. In the formulation it will be present as the ionic form R₂-O-(CH₂CH₂O)ₚSO₃⁻ with a corresponding counter ion, preferred counter ions are group I and II metals, amines, most preferably sodium.

### Methyl Ester Ethoxylate (MEE)

A preferred methyl ester ethoxylate surfactant is of the form:

R₃(-C=O)-O-(CH₂CH₂-O)ₙ-CH₃

Where R₃COO is a fatty acid moiety, such as oleic, stearic, palmitic. Fatty acid nomenclature is to describe the fatty acid by 2 numbers A:B where A is the number of carbons in the fatty acid and B is the number of double bonds it contains. For example oleic is 18:1, stearic is 18:0 and palmitic 16:0. The position of the double bond on the chain may be given in brackets, 18:1(9) for oleic, 18:2 (9,12) for linoleic where 9 if the number of carbons from the COOH end.

The integer n is the mole average number of ethoxylates

Methyl Ester Ethoxylates (MEE) are described in chapter 8 of Biobased Surfactants (Second Edition) Synthesis, Properties, and Applications Pages 287-301 (AOCS press 2019) by G.A. Smith; J.Am.Oil. Chem.Soc. vol 74 (1997) page 847-859 by Cox M.E. and Weerasooriva U; Tenside Surf.Det. vol 28 (2001) page by 72-80 by Hreczuch et al; by C. Kolano. Household and Personal Care Today (2012) page 52-55; J.Am.Oil. Chem.Soc. vol 72 (1995) page 781-784 by A.Hama *et al.* MEE may be produced the reaction of methyl ester with ethylene oxide, using catalysts based on calcium or magnesium. The catalyst may be removed or left in the MEE.

An alternative route to preparation is transesterification reaction of a methyl ester or esterification reaction of a carboxylic acid with a polyethylene glycol that is methyl terminated at one end of the chain.

The methyl ester may be produced by transesterification reaction of methanol with a triglyceride, or esterification reaction of methanol with a fatty acid. Transesterification reactions of a triglyceride to fatty acid methyl esters and glycerol are discussed in Fattah et al (Front. Energy Res., June 2020, volume 8 article 101) and references therein. Common catalysts for these reactions include sodium hydroxide, potassium hydroxide, and sodium methoxide. Esterase and lipases enzyme may also be used. Triglycerides occur naturally in plant fats or oils, preferred sources are rapeseed oil, castor oil, maize oil, cottonseed oil, olive oil, palm oil, safflower oil, sesame oil, soybean oil, high steric/high oleic sunflower oil, high oleic sunflower oil, non-edible vegetable oils, tall oil and any mixture thereof and any derivative thereof. The oil from trees is called tall oil. Used food cooking oils may be utilised. Triglycerides may also be obtained from algae, fungi, yeast or bacteria. Plant sources are preferred.

Distillation and fractionation process may be used in the production of the methyl ester or carboxylic acid to produce the desired carbon chain distribution. Preferred sources of triglyceride are those which contain less than 35%wt polyunsaturated fatty acids in the oil before distillation, fractionation, or hydrogenation.

Fatty acid and methyl ester may be obtained from Oleochemical suppliers such as Wilmar, KLK Oleo, Unilever oleochemical Indonesia. Biodiesel is methyl ester and these sources may be used.

When ESB is MEE preferably has a mole average of from 8 to 30 ethoxylate groups (EO), more preferably from 10 to 20. The most preferred ethoxylate comprises 12 to 18EO.

Preferably, at least 10% wt., more preferably at least 30% wt. of the total C18:1 MEE in the composition has from 9 to 11EO, even more preferably at least 10wt% is exactly 10EO. For example when the MEE has a mole average of 10EO then at least 10 wt.% of the MEE should consist of ethoxylate with 9, 10 and 11 ethoxylate groups.

The methyl ester ethoxylate preferably has a mole average of from 8 to 13 ethoxylate groups (EO). The most preferred ethoxylate has a mol average of from 9 to 11EO, even more preferably 10EO. When the MEE has a mole average of 10EO then at least 10 wt.% of the MEE should consist of ethoxylate with 9, 10 and 11 ethoxylate groups.

In the context of the wider MEE contribution, it is preferred that at least 40wt% of the total MEE in the composition is C18:1.

In addition, it is preferred that the MEE component also comprises some C16 MEE.

Accordingly, it is preferred that the total MEE component comprises from 5 to 50% wt. total MEE, C16 MEE. Preferably the C16 MEE is greater than 90wt%, more preferably greater than 95wt% C16:0.

Further, it is preferred that the total MEE component comprises less than 15% wt, more preferably less than 10wt%, most preferably less than 5wt% total MEE of polyunsaturated C18, i.e. C18:2 and C18:3. Preferably C18:3 is present at less than 1 wt%, more preferably less than 0.5wt%, most preferably essentially absent. The levels of polyunsaturation may be controlled by distillation, fractionation or partial hydrogenation of the raw materials (triglyceride or methyl ester) or of the MEE.

Further, it is preferred that the C18:0 component is less than 10wt% by weight of the total MEE present.

Further, it is preferred that the components with carbon chains of 15 or shorter comprise less than 4wt% by weight of the total MEE present.

A particularly preferred MEE has 2 to 26 wt.% of the MEE C16:0 chains, 1 to 10 wt.% C18:0 chains, 50 to 85 wt.% C18:1 chains and 1 to 12 wt.% C18:2 chains.

Preferred sources for the alkyl groups for the MEE include methyl ester derived from distilled palm oil and distilled high oleic methyl ester derived from palm kernel oil, partially hydrogenated methyl ester of low euric rapeseed oil, methyl ester of high oleic sunflower oil, methyl ester of high oleic safflower oil and methyl ester of high oleic soybean oil.

High Oleic oils are available from DuPont (Plenish high oleice soybean oil), Monsanto (Visitive Gold Soybean oil), Dow (Omega-9 Canola oil, Omega-9 sunflower oil), the National Sunflower Association and Oilseeds International.

Preferably the double bonds in the MEE are greater than 80wt% in the cis configuration. Preferably the 18:1 component is oleic. Preferably the 18:2 component is linoleic.

The methyl group of the methyl ester may be replace by an ethyl or propyl group. Methyl is most preferred.

Preferably, the methyl ester ethoxylate comprises from 0.1 to 95% wt. of the composition methyl ester ethoxylate. More preferably the composition comprises from 2 to 40% MEE and most preferably from 4 to 30% wt. MEE.

Preferably, the composition comprises at least 50% wt. water but this depends on the level of total surfactant and is adjusted accordingly.

Anionic surfactant weights are calculated as the protonated form.

### Linear Alkyl Benzene Sulfonate

Preferably, the composition comprises anionic surfactant LAS (linear alkyl benzene sulphonate).

Suitable alkyl benzene sulphonate (LAS) may be obtained, by sulphonating commercially available linear alkyl benzene (LAB); suitable LAB includes low 2-phenyl LAB, such as those supplied by Sasol under the tradename Isochem(R) or those supplied by Petresa under the tradename Petrelab(R), other suitable LAB include high 2 -phenyl LAB, such as those supplied by Sasol under the tradename Hyblene(R). A suitable anionic detersive surfactant is alkyl benzene sulphonate that is obtained by DETAL catalyzed process, although other synthesis routes, such as HF, may also be suitable. In one aspect a magnesium salt of LAS is used. Suitable linear alkylbenzene sulfonates include those with an alkyl chain length of from 10 to 18, preferably 11 to 15 carbon atoms, more preferably with an average chain length of C12. Each alkyl chain homologue consists of a mixture of all the possible sulfophenyl isomers except for the 1-phenyl isomer. LAS is normally formulated into compositions in acid (i.e. HLAS) form and then at least partially neutralized in-situ.

Preferably, linear alkyl benzene sulphonate surfactant is present at from 1 to 20% wt., more preferably from 2 to 15% wt. of the composition, most preferably 8 to 12 wt.%.

### Nonionic surfactants

Preferably, the composition comprises nonionic surfactant including any of alcohol ethoxylates, alkoxylated fatty acid alkyl esters, alkylpolyglycosides (APGs), alkoxylated amines, ethoxylated glycerol esters, fatty acid monoethanolamides, fatty acid diethanolamides, ethoxylated fatty acid monoethanolamides, propoxylated fatty acid monoethanolamides, polyhydroxyalkyl fatty acid amides, or N-acyl N-alkyl derivatives of glucosamine, polysorbates (TWEENS) or mixtures thereof.

Compositions may include soap.

A composition of the invention may contain amphoteric (zwitterionic) and/or cationic surfactants) alone or in addition to the non-soap anionic and/or nonionic surfactants described above.

Specific cationic surfactants include C8 to C18 alkyl dimethyl ammonium halides and derivatives thereof in which one or two hydroxyethyl groups replace one or two of the methyl groups, and mixtures thereof.

Cationic surfactants include quaternary ammonium compounds.

Specific amphoteric (zwitterionic) surfactants include amine oxides and/or betaines e.g. alkyl amine oxides, alkyl betaines, alkyl amidopropyl betaines, alkyl sulfobetaines (sultaines), alkyl glycinates, alkyl carboxyglycinates, alkyl amphoacetates, alkyl amphopropionates, alkylamphoglycinates, alkyl amidopropyl hydroxysultaines, acyl taurates and acyl glutamates, having alkyl radicals containing from about 8 to about 22 carbon atoms preferably selected from C12, C14, C16 ,C18 and C18:1, the term "alkyl" being used to include the alkyl portion of higher acyl radicals.

Preferred amine oxides are alkyl dimethyl amine oxide and alkyl amido propyl dimethyl amine oxide, more preferably alkyl dimethyl amine oxide. Especially preferred are lauryl dimethylamine oxide, coco dimethyl amine oxide and coco amido propyl dimethyl amine oxide.

Suitable betaines include alkyl betaine, alkyl amido betaine, alkyl amidopropyl betaine, alkyl sulphobetaine and alkyl phosphobetaine, wherein the alkyl groups preferably have from 8 to 19 carbon atoms.

Examples include cocodimethyl sulphopropyl betaine, cetyl betaine, laurylamidopropyl betaine, caprylate/caprate betaine, capryl/capramidopropyl betaine, cocamidopropyl hydroxysultaine, cocobutyramido hydroxysultaine, and preferably lauryl betaine, cocamidopropyl betaine and sodium cocamphopropionate. Preferably the betaine is cocamidopropyl betaine (CAPB).

Some compositions may be free from anionic surfactant, e.g. cationic actives e.g. quaternary ammonium compounds.

Some compositions such as fabric softening compositions may comprise low levels (less than 4%wt) or may be free from anionic or cationic surfactant.

The composition may comprise a fabric softening active. These may be any material known to soften fabrics. These may be polymeric materials or compounds known to soften materials. Examples of suitable fabric softening actives include: quaternary ammonium compounds, silicone polymers, polysaccharides, clays, amines, fatty esters, fatty N-oxides, dispersible polyolefins, polymer latexes and mixtures thereof.

The fabric softening actives may preferably be cationic or non-ionic materials. Preferably, the fabric softening actives of the present invention are cationic materials. The preferred softening actives for use in fabric conditioner compositions of the invention are quaternary ammonium compounds (QAC). Most preferably the quaternary ammonium compounds are tri-ethanol amine quaternary ammonium (TEA) compounds. The quaternary ammonium compounds may comprise fatty acid chains from any suitable source, preferably palm oil or tallow. It may be preferred that the fatty acid chains are sourced from plant sources.

### Optional Ingredients

The compositions of the present invention may contain further optional home care ingredients including further surfactants, builders, sequestrants, organic acids, preformed peracids, polymeric dispersing agents, clay soil removal/anti-redeposition agents, dye transfer inhibiting agents, alkoxylated cationic or zwitterionic di or polyamine polymers, anti-redeposition polymers e.g. alkoxylated polyamines, soil release polymers, dispersants, enzymes, and enzyme stabilizers, catalytic materials, bleach activators, thickening polymers, foam boosters, antifoams, insect repellents, dyes e.g. shading or hueing dyes, preservatives (e.g., bactericides), pH buffering agents, perfume, perfume delivery systems including perfume microcapsules preferably with cationic deposition aids, hydrotropes, carriers, structure elasticizing agents, polyelectrolytes, processing aids, solvents and/or pigments and mixtures thereof, anti-wrinkle agents, anti-shrinking agents, anti-oxidants, anti-corrosion agents, drape imparting agents, anti-static agents, ironing aids, antifoams, colourants, pearlisers and/or opacifiers, processing aids, e.g. electrolytes, hygiene agents, such as anti-bacterials and antifungals e.g. quaternary ammonium compound, organic acid, hydrogen peroxide or chloroxylenol, skin benefit agents, anti-redeposition agents, sunscreens, or any combination thereof.

### EXAMPLE

### Synthesis of N-methyl-anthranilate substituted zwitterionic polysaccharides

The zwitterionic polysaccharide (1 g) is dissolved in a 50:50 mixture of dimethyl sulphoxide (DMSO) and 0.1 M aqueous sodium borate solution (90 ml). The mixture is stirred at room temperature for 20 minutes to give a clear, viscous solution. A solution of N-methylisatoic anhydride (0.1 g) in DMSO (3 ml) is added and the solution is stirred at room temperature for a further 18 hours. The solution is then added dropwise to vigorously stirring isopropanol (400 ml) to give a white precipitate. The precipitate is filtered off, washed with more isopropanol and dried under vacuum at 40°C. The polymer is dissolved in water (20 ml) and dialysed against deionised water (3,000 molecular weight cut-off membrane) for 72 hours to remove any residual N-methylisatoic anhydride and its N-methylanthranilic acid reaction product. Finally the purified polymer solution is freeze-dried. The resulting powders were optically white. The molecular weights of the modified polymers were measured using Gel Permeation Chromatography. The degree of substitution (DS) for the MANT grafting is measured by hydrolysing the polymer (dissolving in water and adjusting the pH 13 for 12 hours) before measuring the fluorescence spectrum and comparing with N-methylanthranilic acid solution containing 0.1 mg/mL polymer at different concentrations.

### EXAMPLES

Typical formulations include:

| **Ingredient** | **Weight%** | | | | | | | |
|---|---|---|---|---|---|---|---|---|
| | **A** | **B** | **C** | **D** | **E** | **F** | **G** | **H** |
| C11.8 linear alkyl benzene sulfonate | 17 | 13 | 1.5 | 4.0 | 4 | 2 | 0 | 0 |
| C12-14 alkylethoxy (3) sulfate¹ | 8 | 10 | 5.5 | 2.0 | 3 | 0 | 8 | 0 |
| Oleyl ether sulfate (6EO) | 0 | 0 | 0 | 0 | 0 | 4 | 0 | 4 |
| C12-14 alkyl-7 ethoxylate² | 5 | 10 | 1.0 | 9 | | | 5 | |
| Oleic Methyl Ester Ethoxylate (10EO) | | | | | 3 | 4 | | 8 |
| C12-14 dimethylamine oxide | 1 | 0.5 | 0.5 | 0.5 | 0.5 | 0 | 1 | 1 |
| C12-18 fatty acid | 2 | 1.5 | 0.0 | 1 | 0.5 | 0 | 1 | 0 |
| Ethoxylated polyethyleneimine (Sokalan HP20) | 0 | 1.5 | 0.5 | 0 | 1 | 0 | 0 | 0 |
| Sulfated Ethoxylated Hexamethylenediamine Quaternized | 1 | 0 | 0 | 0.5 | 1 | 1.5 | 1 | 1 |
| Co-polymer of PEG / Vinyl Acetate with 6000Mw | 1 | 1.5 | 0.5 | 0.5 | 0.5 | 0.5 | 1 | 1 |
| PEG-2 Stearate | 1 | 0 | 0 | 0 | 0 | 0 | 1 | 1 |
| PEG/PPG-10/2 Propylheptyl Ether | 3 | 1 | 0 | 1 | 0 | 0 | 1 | 1 |
| Hydrogenated Castor Oil | 0.1 | 0.1 | 0.2 | 0.1 | 0 | 0.2 | 0.2 | 0.2 |
| Propylene glycol | 3 | 2 | 0 | 0 | 0 | 2 | 0 | 0 |
| Glycerol | 1 | 1 | 0 | 1 | 1 | 1 | 0 | 0 |
| Blue Dye (ethoxylate anthraquinone) | 0.002 | 0.001 | 0.001 | 0.001 | 0.001 | 0.002 | 0 | 0 |
| Polyester Soil Release Agent | 0.5 | 0 | 0.5 | 1 | 1 | 1 | 0.5 | 0.5 |
| Sequesterant (citric acid/Dequest 2066) | 2 | 1 | 1 | 1 | 1 | 2 | 1 | 1 |
| Protease - Purafect ^{®} (85mg active/g) | 0.3 | 0.2 | 0.1 | 0.2 | 0.3 | 0.3 | 0.3 | 0.3 |
| Esterase - Lipex ^{®} (20mg active/g) | 0.1 | 0.15 | 0.1 | 0.1 | 0 | 0 | 0 | 0 |
| Cellulase - Celluclean ^{®} (16mg active/g) | 0.1 | 0.1 | 0.1 | 0.1 | 0.1 | 0.1 | 0.1 | 0.1 |
| Amylase - Stainzyme^{®} | 0.1 | 0.1 | 0.1 | 0.1 | 0.1 | 0.1 | 0.1 | 0.1 |
| Mannase - Mannaway ^{®} (4mg active/g) | 0.1 | 0.05 | 0.05 | 0.05 | 0.05 | 0.05 | 0.05 | 0.0 5 |
| Fluorescer of Invention | 0.1 | 0.1 | 0.2 | 0.1 | 0.1 | 0.1 | 0.1 | 0.1 |
| Preservative | 0.5 | 0.2 | 0.5 | 1 | 0 | 1 | 1 | 1 |
| Base (monoethanoamine or triethanolamine/NaOH) | To pH 7.5 | | | | | | | |
| Parfum | 0.6 | 0.6 | 0.5 | 0.4 | 0.8 | 0.5 | 0.4 | 0.4 |
| Water and minors | Remainder | | | | | | | |

| | | | | | | | | |
|---|---|---|---|---|---|---|---|---|
| ^{1,2} also made with the C12-18 versions | | | | | | | | |

## Claims

1. An optical brightening agent (OBA) comprising a zwitterionic polysaccharide linked to a fluorescent group (FG) having an absorption band in the UV region of light and an emission band in the visible region of light.

2. An OBA according to claim 1 wherein the zwitterionic polysaccharide comprises a betaine modified polysaccharide or a sulfobetaine modified polysaccharide or a carboxybetaine modified polysaccharide.

3. An OBA according to claim 1 wherein the zwitterionic polysaccharide comprises a betaine modified APG.

4. An OBA according to claim 1 wherein the FG comprises a mono or polycyclic ring system comprising at least-one heteroatom selected from N, O and S, and conjugated double bonds.

5. An OBA according to claim 1 or claim 2 wherein the heteroatom is present in the ring structure or as a ring substituent.

6. An OBA according to any preceding claim wherein the FG comprises no more than four cyclic moieties, more preferably no more than three, even more preferably no more than two, most preferably no more than one

7. An OBA according to any preceding claim wherein the FG comprises a carboxylic group and/or an amide group.

8. An OBA according to any preceding claim wherein the FG comprises a carboxy and/or amide functionalized cyclic moiety.

9. An OBA according to any preceding claim wherein the FB comprises an amino-benzoate moiety.

10. An OBA according to any preceding claim wherein the FB comprises methyl 2-aminobenzoate (MANT).

11. An OBA according to any of claims 1 - 8 wherein the FB comprises coumarin.

12. A substrate treatment composition comprising an optical brightening agent (OBA) according to any preceding claim.

13. A method of treating a substrate comprising the step of adding the substrate treatment composition comprising an OBA according to any of claims 1 - 11 to water to form a wash liquor and treating a substrate with said wash liquor.

14. A method of making a substrate treatment composition comprising the step including in the substrate treatment composition an OBA of any of claims 1 - 11.

15. A method of making an OBA comprising the step of linking a fluorescent group (FG) having an absorption band in the UV region of light and an emission band in the visible region of light with a zwitterionic polysaccharide.

## Patentansprüche

1. Optischer Aufheller (OBA), umfassend ein zwitterionisches Polysaccharid, das mit einer fluoreszierenden Gruppe (FG) verknüpft ist, die ein Absorptionsband im UV-Bereich des Lichts und ein Emissionsband im sichtbaren Bereich des Lichts aufweist.

2. OBA nach Anspruch 1, wobei das zwitterionische Polysaccharid ein Betainmodifiziertes Polysaccharid oder ein Sulfobetain-modifiziertes Polysaccharid oder ein Carboxybetain-modifiziertes Polysaccharid umfasst.

3. OBA nach Anspruch 1, wobei das zwitterionische Polysaccharid ein Betainmodifiziertes APG umfasst.

4. OBA nach Anspruch 1, wobei die FG ein mono- oder polycyclisches Ringsystem umfasst, das mindestens ein Heteroatom umfasst, ausgewählt unter N, O und S sowie konjugierten Doppelbindungen.

5. OBA nach Anspruch 1 oder Anspruch 2, wobei das Heteroatom in der Ringstruktur oder als Ringsubstituent vorliegt.

6. OBA nach einem vorhergehenden Anspruch, wobei die FG nicht mehr als vier cyclische Einheiten umfasst, bevorzugter nicht mehr als drei, noch bevorzugter nicht mehr als zwei, höchst bevorzugt nicht mehr als eine.

7. OBA nach einem vorhergehenden Anspruch, wobei die FG eine Carboxylgruppe und/oder eine Amidgruppe umfasst.

8. OBA nach einem vorhergehenden Anspruch, wobei die FG eine carboxy- und/oder amidfunktionalisierte cyclische Einheit umfasst.

9. OBA nach einem vorhergehenden Anspruch, wobei die FB eine Aminobenzoat-Einheit umfasst.

10. OBA nach einem vorhergehenden Anspruch, wobei die FB Methyl-2-aminobenzoat (MANT) umfasst.

11. OBA nach einem der Ansprüche 1 bis 8, wobei die FB Cumarin umfasst.

12. Substratbehandlungszusammensetzung, die einen optischen Aufheller (OBA) nach einem vorhergehenden Anspruch umfasst.

13. Verfahren zur Behandlung eines Substrats, umfassend den Schritt des Hinzufügens der Substratbehandlungszusammensetzung, die einen OBA nach einem der Ansprüche 1 bis 11 umfasst, zu Wasser, um eine Waschflotte zu bilden, und des Behandelns eines Substrats mit dieser Waschflotte.

14. Verfahren zur Herstellung einer Substratbehandlungszusammensetzung, umfassend den Schritt der Aufnahme eines OBA nach einem der Ansprüche 1 bis 11 in die Substratbehandlungszusammensetzung.

15. Verfahren zur Herstellung eines OBA, umfassend den Schritt des Verknüpfens einer fluoreszierenden Gruppe (FG) mit einem Absorptionsband im UV-Bereich des Lichts und einem Emissionsband im sichtbaren Bereich des Lichts mit einem zwitterionischen Polysaccharid.

## Revendications

1. Agent d'azurage optique (OBA) comprenant un polysaccharide zwitterionique lié à un groupe fluorescent (FG) ayant une bande d'absorption dans la région UV de la lumière et une bande d'émission dans la région visible de la lumière.

2. OBA selon la revendication 1, dans lequel le polysaccharide zwitterionique comprend un polysaccharide modifié par une bétaïne ou un polysaccharide modifié par une sulfobétaïne ou un polysaccharide modifié par une carboxybétaïne.

3. OBA selon la revendication 1, dans lequel le polysaccharide zwitterionique comprend un APG modifié par une bétaïne.

4. OBA selon la revendication 1, dans lequel le FG comprend un système de noyau mono- ou polycyclique comprenant au moins un hétéroatome choisi parmi N, O et S, et des doubles liaisons conjuguées.

5. OBA selon la revendication 1 ou la revendication 2, dans lequel l'hétéroatome est présent dans la structure cyclique ou comme substituant du noyau.

6. OBA selon l'une quelconque des revendications précédentes, dans lequel le FG comprend au maximum quatre fractions cycliques, plus préférentiellement au maximum trois, encore plus préférentiellement au maximum deux, de la façon la plus préférentielle au maximum une.

7. OBA selon l'une quelconque des revendications précédentes, dans lequel le FG comprend un groupe carboxylique et/ou un groupe amide.

8. OBA selon l'une quelconque des revendications précédentes, dans lequel le FG comprend une fraction cyclique fonctionnalisée carboxy et/ou amide.

9. OBA selon l'une quelconque des revendications précédentes, dans lequel le FB comprend une fraction aminobenzoate.

10. OBA selon l'une quelconque des revendications précédentes, dans lequel le FB comprend du 2-aminobenzoate de méthyle (MANT).

11. OBA selon l'une quelconque des revendications 1 à 8, dans lequel le FB comprend une coumarine.

12. Composition de traitement de substrat comprenant un agent d'azurage optique (OBA) selon l'une quelconque des revendications précédentes.

13. Procédé de traitement d'un substrat, comprenant l'étape consistant à ajouter à de l'eau la composition de traitement de substrat comprenant un OBA selon l'une quelconque des revendications 1 à 11 afin de former une liqueur de lavage, et à traiter un substrat avec ladite liqueur de lavage.

14. Procédé de fabrication d'une composition de traitement de substrat, comprenant l'étape consistant à incorporer dans la composition de traitement de substrat un OBA selon l'une quelconque des revendications 1 à 11.

15. Procédé de fabrication d'un OBA, comprenant l'étape consistant à lier un groupe fluorescent (FG) ayant une bande d'absorption dans la région UV de la lumière et une bande d'émission dans la région visible de la lumière avec un polysaccharide zwitterionique.
